# EUROPEAN PATENT SPECIFICATION

(11) **EP 4 070 564 B1**
(45) Date of publication and mention of the grant of the patent: **10.06.2026**
(21) Application number: 20812288.7
(22) Date of filing: 24.11.2020
(51) Int. Cl.: H04R 1/06, H02G 15/013

(54) **METHOD OF MAKING A LOUDSPEAKER ENCLOSURE**
VERFAHREN ZUR HERSTELLUNG EINES LAUTSPRECHERGEHÄUSES
PROCÉDÉ DE FABRICATION D'UNE ENCEINTE DE HAUT-PARLEUR

(30) Priority: 06.12.2019 GB 201917870
(43) Date of publication of application: 12.10.2022
(73) Proprietor: PSS Belgium NV, 9200 Dendermonde (BE)
(72) Inventor: NI, Danny, Futian District, Shenzhen, (CN); HU, Roger, Futian District, Shenzhen, (CN)
(74) Representative: Mewburn Ellis LLP
(86) International application number: PCT/EP2020/083226
(87) International publication number: WO 2021/110484

(56) References cited:
- JP-A- 2013 005 142
- KR-B1- 100 691 769
- US-A1- 2012 076 340
- US-B2- 8 851 924

## Description

### Field of the Invention

The present invention relates to a method of making a loudspeaker enclosure, and to a loudspeaker enclosure resulting from such a method.

### Background

When making a loudspeaker enclosure for accommodating a loudspeaker, it is conventional to install an audio cable which passes from outside the loudspeaker enclosure to inside the loudspeaker to transmit electrical signals to the loudspeaker mounted in a loudspeaker aperture in the loudspeaker enclosure. The loudspeaker is typically configured to produce audio corresponding to the electrical signals transmitted by the audio cable.

When installing the audio cable, it is generally important to seal a cable channel along which the audio cable passes out from the loudspeaker enclosure. An insufficiently airtight seal can lead to acoustic waves escaping from the loudspeaker enclosure. This is known to cause undesirable blowing and/or whistling noises.

Two commonly implemented methods to seal a cable channel in a loudspeaker enclosure are: the use of an adhesive, and the use of sealing rubber.

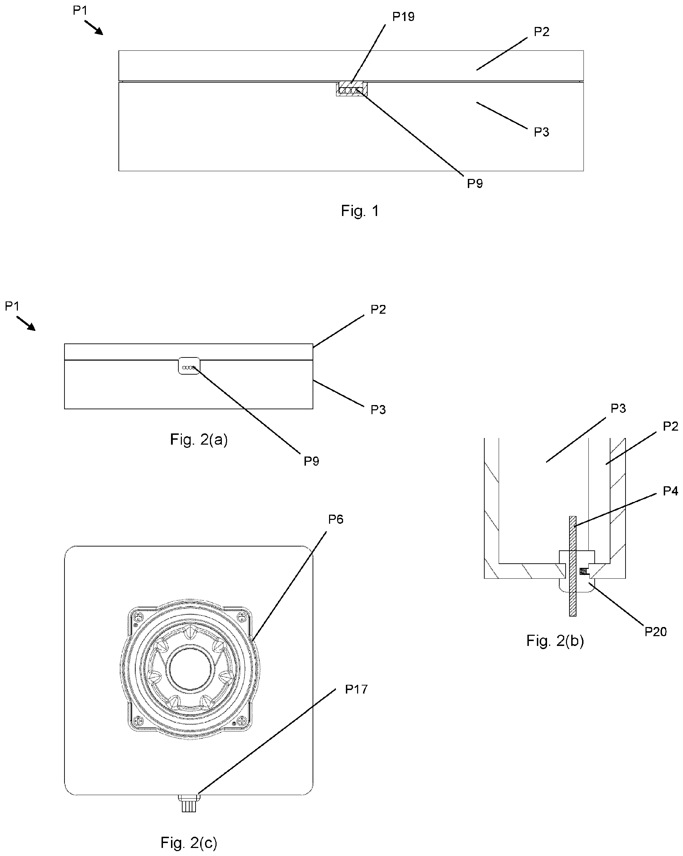

With reference to Fig. 1, one method for making a loudspeaker enclosure P1 considered by the present inventors includes joining a first part of the loudspeaker enclosure P2 to a second part of the loudspeaker enclosure P3. The joining of the first and second parts of the loudspeaker enclosure P1, P2 intentionally leaves a space which forms a cable channel P9, into which an audio cable is located. The opening of the cable channel is sealed by using an adhesive in an adhesive area P19 to glue the first and second parts of the loudspeaker enclosure together.

One problem with this method is that the adhesive must be applied to the outside of the loudspeaker enclosure. This means that if the audio cable is flexibly moved, the adhesive must move with the audio cable. The consequence of this is that a flexible adhesive must be used to seal the opening of the cable channel or else the seal may be easily broken. The adhesive considered by the present inventors for this purpose is a silicon glue. However, silicon glue is very difficult to dry, generally requiring 24 hours to dry and form a seal. Maintaining stable conditions over such a long period of time can be difficult, and so the seal formed by the silicon glue can be poor and leakage of acoustic waves through the poor seal is known to occur. Further, if the adhesive used is a flexible one, such as silicone glue, it lacks the tensile strength to provide strain relief to an audio cable inserted into the cable channel when the cable is under tension.

With reference to Fig. 2, an alternative method for making a loudspeaker enclosure P1 considered by the present inventors includes joining a first part of the loudspeaker enclosure P2 to a second part of the loudspeaker enclosure P3. The joining of the first and second parts of the loudspeaker enclosure intentionally leaves a space which forms a cable channel P9, into which an audio cable P4 is inserted. The opening P17 of the cable channel is sealed by inserting a sealing rubber P20 which fully occupies any empty space between the first and second parts of the loudspeaker enclosure at the opening of the cable channel.

Typically, the audio cable P4 would be connected to a loudspeaker P6 to transmit electrical signals to the loudspeaker. The loudspeaker is configured to produce audio corresponding to the electrical signals transmitted by the audio cable.

One advantage of this method depicted in Fig. 2 over the method depicted in Fig. 1 is that the sealing rubber possesses the tensile strength required to provide strain relief to the cable P4 inserted into the cable channel P9 when the cable is under tension. The sealing rubber may therefore be referred as a "strain relief" element.

However, one problem with this method is that using a sealing rubber to seal the opening of the cable channel is an expensive and technically demanding process requiring bespoke machining to produce the sealing rubber for the opening of the cable channel.

An audio output apparatus is disclosed in KR 100691769 B1 in which a cable inlet portion for receiving the audio signal cable is installed at one side of the housing. A space forming member is disposed inside the cable inlet portion to form a predetermined space between the space forming member and the housing including the cable inlet portion. The predetermined space is filled with a waterproof material.

The present invention has been devised in light of the above considerations.

### Summary of the Invention

In a first aspect, the present invention provides:
A method of making a loudspeaker enclosure, the method including:
providing a precursor loudspeaker enclosure, the precursor loudspeaker including:
   a cable channel which extends from a cable opening in an outer wall of the enclosure to an interior space within the enclosure, wherein a cable is located in the cable channel such that the cable located in the cable channel extends from outside the enclosure and through the cable channel to the interior space within the enclosure;
   a first port;
   a second port;
   an adhesive channel which extends from the first port to the second port along an adhesive channel path which extends around the cable located in the cable channel, wherein the adhesive channel is partly defined by an outer surface of the cable;
injecting unhardened adhesive into the first port such that the unhardened adhesive is forced along the adhesive channel such that it is brought into contact with the outer surface of the cable; and
hardening the adhesive thereby attaching the cable to the enclosure and sealing the cable channel.

In this way, the cable channel can be sealed effectively using a wide range of adhesives, i.e. without having to use an expensive flexible adhesive such as silicon glue, since the cable outlet is provided by a cable outlet in an outer wall of the enclosure, rather than by glue. This may allow cheaper less flexible adhesives to be used, e.g. AB glue, water-based gel, UV glue. Also, a seal can more easily be formed simply by injecting adhesive into the first port, e.g. until some excess adhesive reaches or comes out from the second port.

The loudspeaker enclosure may be considered as being made from the precursor loudspeaker when the adhesive injected into the first port has hardened, or there may be further steps required before the precursor loudspeaker enclosure is considered as a loudspeaker enclosure.

The step of hardening the adhesive may involve leaving the unhardened adhesive until it hardens, or performing a more active step of applying some process (e.g. a curing process) to the unhardened adhesive in order to harden it. Various curing processes are known in the art.

The precursor loudspeaker enclosure preferably includes a loudspeaker aperture configured to have a loudspeaker mounted therein such that a first side of a loudspeaker mounted in the loudspeaker aperture is configured to direct sound into a space surrounding the enclosure whilst a second side of the loudspeaker mounted in the loudspeaker aperture directs sound into the interior space within the loudspeaker enclosure.

The method may include mounting a loudspeaker in the loudspeaker aperture such that a first side of a loudspeaker mounted in the loudspeaker aperture is configured to direct sound into a space surrounding the enclosure whilst a second side of the loudspeaker mounted in the loudspeaker aperture directs sound into the interior space within the loudspeaker enclosure.

By "sealing the cable channel", it is intended to mean that a seal is formed in the cable channel which acts to block sound within the interior space from reaching the exterior of the enclosure via the cable channel, preferably by substantially preventing air from flowing through the cable channel.

Preferably, the unhardened adhesive is injected into the first port such that the unhardened adhesive fills an adhesive cavity located within the cable channel. The adhesive cavity may be a region of the cable channel which is configured to receive unhardened adhesive injected into the first port, wherein filling the adhesive cavity causes the cable channel to be sealed, e.g. by substantially preventing air from flowing through the cable channel.

Preferably, the unhardened adhesive is injected into the first port such that the unhardened adhesive reaches the second port, since this will inform a user injecting the adhesive into the first port that the adhesive has filled the adhesive cavity.

The precursor loudspeaker enclosure includes:
a first enclosure part; and
a second enclosure part configured to be attached to the first enclosure part;
wherein the first enclosure part includes the first and second ports.

By the enclosure having two parts, it is easier to locate the cable in the cable channel (and mount a loudspeaker in a loudspeaker aperture) prior to attaching the first enclosure part to the second enclosure part.

Thus, the method may include:
locating the cable in the cable channel;
after locating the cable in the cable channel, attaching the first enclosure part to the second enclosure part.

Attaching the first enclosure part to the second enclosure part may take place after mounting a loudspeaker in a loudspeaker aperture for similar reasons.

Note that the step of locating the cable in the cable channel may be viewed as part of the step of providing the precursor loudspeaker enclosure (since the precursor loudspeaker enclosure is defined above as having the cable located in the cable channel).

Of course, whilst it may be preferable to locate the cable in the cable channel before attaching the first enclosure part to the second enclosure part, this is not a requirement of the invention, since these steps could be reversed. For example, it would be possible to locate the cable in the cable channel after the first and second enclosure parts are attached together (e.g. with the loudspeaker being mounted as a final step).

The second enclosure part defines at least part of the adhesive channel (whereby the adhesive path preferably extends into and back out from the second enclosure). In this way the hardened adhesive can provide an attachment between the first enclosure part and the second enclosure part. Preferably, the second enclosure part defines at least part of (in some embodiments the entirety of) the cable channel and at least part of (in some embodiments the entirety of) the cable opening. Preferably at least part of the cable channel (in some embodiments the entirety of the cable channel) in the second enclosure part is open prior to the first enclosure part being attached to the second enclosure part. This makes it easier to locate the cable in the cable channel prior to the first and second enclosure parts being attached together.

The first and/or second enclosure parts may each include a groove configured to accommodate sealing foam for providing a seal between the interior space within the enclosure and the exterior of the enclosure when the first and second enclosure parts are attached together. The groove may be located between an outer wall of the enclosure and one or more interior walls of the enclosure. A hole in the sealing foam may define part of the cable channel.

The second enclosure part may be a container that includes a cavity, and the first enclosure part may be a lid configured to cover the cavity in the second enclosure part when the second enclosure part is attached to the first enclosure part thereby providing the interior space within the enclosure.

The cable channel and adhesive channel may be at least partly formed by a pillar region in the second enclosure part, wherein the pillar region extends from a floor of the second enclosure part towards the first enclosure part when the first and second enclosure parts are attached together

The first port may be configured to receive a distal end of a glue gun, and the method may include injecting unhardened adhesive into the first port using a glue gun whose distal end is received in the first port.

The cable channel may extend from the cable opening along a cable channel path to the interior space within the enclosure.

Preferably, in a first region of the cable channel path which is on a side of the adhesive channel proximal to the cable opening, the cable channel has a size and shape configured to snugly fit the cable, preferably such that unhardened adhesive injected in the first port is substantially prevented from entering the first region (whereby it might escape out from the enclosure via the first region of the cable channel path and the cable opening cable opening in an outer wall of the enclosure).

Preferably, in a second region of the cable channel path which is on a side of the adhesive channel distal to the cable opening, the cable channel has a size and shape configured to snugly fit the cable, preferably such that unhardened adhesive injected in the first port is substantially prevented from entering the second region (whereby it might escape into the interior space within the enclosure via the second region of the cable channel path).

Preferably, in an intermediate region of the cable channel path between the first and second regions, the cable channel has a size and shape which does not snugly fit the cable thereby providing an adhesive cavity which is configured to receive unhardened adhesive injected into the first port thereby allowing unhardened adhesive to coat the outer surface of the cable in this region. Such an adhesive cavity has already been discussed, above.

Preferably, the cable opening is separated from the adhesive channel (e.g. by a suitably long first region of the cable channel) by a distance of at least Xmm, where X is preferably 2mm or more. X could also be 3mm or more, or 4mm or more. X is preferably in the range 2-10mm, more preferably 2-5mm for most loudspeaker applications.

The cable may be a multi-cable which includes a plurality of sub-cables, each sub-cable having one or more wires surrounded by an outer sleeve, wherein the plurality of sub-cables are joined together by their outer sleeves.

A second aspect of the invention relates to a loudspeaker enclosure made in accordance with a method according to the first aspect of the invention.

A second aspect of the invention therefore provides:
A loudspeaker enclosure including:
a first enclosure part including a first port and a second port;
a second enclosure part attached to the first enclosure part;
an adhesive channel which extends from the first port to the second port along an adhesive channel path, wherein the second enclosure part defines at least part of the adhesive channel; and
a cable channel which extends from a cable opening in an outer wall of the enclosure to an interior space within the enclosure, wherein a cable is located in the cable channel such that the cable located in the cable channel extends from outside the enclosure and through the cable channel to the interior space within the enclosure;
wherein the adhesive channel extends around the cable located in the cable channel, wherein the adhesive channel is partly defined by an outer surface of the cable;
wherein the adhesive channel contains hardened adhesive which is in contact with the outer surface of the cable, attaches the second enclosure part to the first enclosure part, attaches the cable to the enclosure, and seals the cable channel.

A loudspeaker enclosure according to the second aspect of the invention may include any feature as described, or which results from a method step as described, in connection with the first aspect of the invention.

### Summary of the Figures

Embodiments and experiments illustrating the principles of the invention will now be discussed with reference to the accompanying figures in which:
**Fig. 1** shows use of adhesive to seal the opening of a cable channel of a loudspeaker enclosure
**Fig. 2(a)** shows a loudspeaker enclosure including a cable channel.
**Fig. 2(b)** shows use of sealing rubber configured to seal the opening of the cable channel of Fig. 1(a).
**Fig. 2(c)** shows a loudspeaker enclosure incorporating a loudspeaker.
**Fig. 3(a)** shows a glue gun being used to inject unhardened adhesive into an adhesive channel to seal the opening of a cable channel of a loudspeaker enclosure.
**Fig. 3(b)** is a plan view of the loudspeaker enclosure of Fig. 3(a) depicting the first and second ports which are connected by the adhesive channel.
**Fig. 3(c)** is a cross-section of the loudspeaker enclosure of Fig. 3(a) as viewed in the plane A-A as depicted in Fig. 3(b) depicting the adhesive channel into which unhardened adhesive is injected and the flow path of unhardened adhesive along the adhesive channel.
**Fig. 4(a)** is a cross section of a cable channel as viewed in the plane B-B as depicted in Fig. 3(a), showing a groove between the cable channel opening and an adhesive cavity.
**Fig. 4(b)** is a perspective view of the cross section of the cable channel of Fig. 4(a).
**Fig. 4(c)** is a perspective view of the cross section of the cable channel of Fig. 4(a) wherein the groove has been filled with a sealing foam.
**Fig. 5** is a flow chart depicting a method of making a loudspeaker enclosure in accordance with the present invention.

### Detailed Description of the Invention

Aspects and embodiments of the present invention will now be discussed with reference to the accompanying figures. Further aspects and embodiments will be apparent to those skilled in the art.

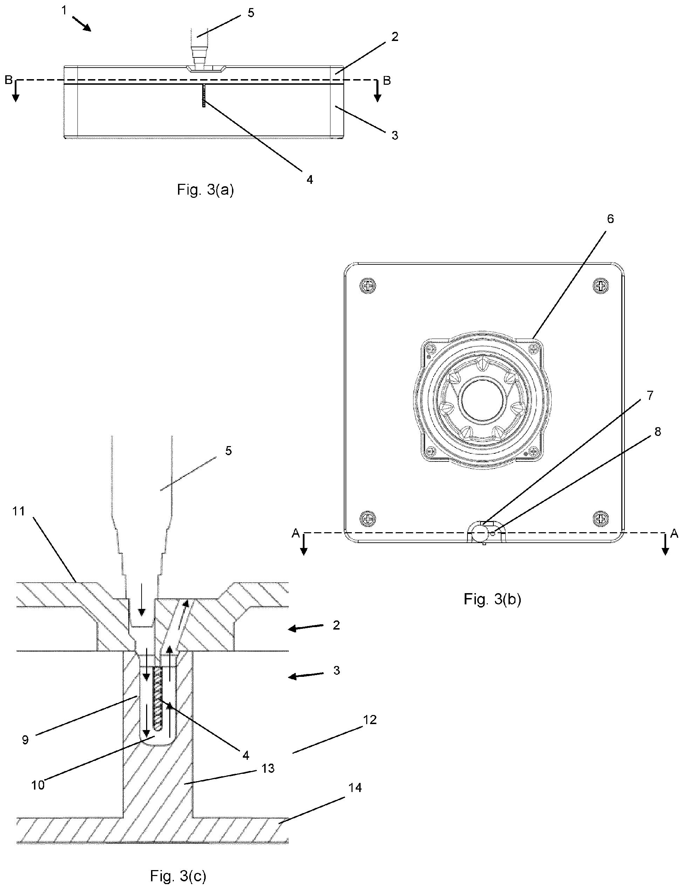

Fig. 3 shows an example method of making a loudspeaker enclosure 1 in accordance with some embodiments of the present invention. Fig. 3(a) depicts a glue gun 5 being used to inject unhardened adhesive into the loudspeaker enclosure 1 to seal a cable channel opening 17 of a cable channel 9 of the loudspeaker enclosure. Fig. 3(b) is a plan view of the loudspeaker enclosure 1. Fig. 3(c) is a cross-section of the loudspeaker enclosure 1 as viewed in the plane A-A as depicted in Fig. 3(b).

The loudspeaker enclosure 1 comprises: a first enclosure part 2, a second enclosure port 3, a loudspeaker aperture (in which a loudspeaker 6 has been mounted as discussed below), a first port 7, a second port 8, a cable channel 9, and an adhesive channel 10.

The first enclosure part 2 includes the first port 7 and the second port 8.

The second enclosure part 3 attaches to the first enclosure part 2. Further, the second enclosure part 3 defines part of the cable channel 9, and part of a cable channel opening 17 such that prior to the first enclosure part 2 being attached to the second enclosure part 3, the part of the cable channel 9 which is defined by the second enclosure 3 part is fully open. The second enclosure part 3 also defines part of the adhesive channel 10 such that when there is hardened adhesive contained within the adhesive channel 10, the hardened adhesive provides the attachment between the first and second enclosure parts 2, 3. The second enclosure part 3 is a container (in this case an open box) which includes a cavity and the first enclosure part 2 is a lid which covers the cavity in the second enclosure part 3 when the first enclosure part 2 and second enclosure part 3 are attached together. The lid covering the cavity defines an interior space within the enclosure 12, and the external walls of the first and second enclosure parts define outer walls of the enclosure 11.

The second enclosure part 3 further includes a pillar region 13 which extends from a floor of the second enclosure part 14 towards the first enclosure part 2 when the first and second enclosure parts 2, 3 are attached together. The pillar region 13 forms part of the cable channel 9 and part of the adhesive channel 10.

Constructing the loudspeaker enclosure 1 from the first and second enclosure parts 2, 3 requires reduced tooling compared to the example loudspeaker enclosure depicted in Fig. 2 as the amount of tooling required to attach just two components to one another is reduced relative to an example which uses a sealing rubber.

The loudspeaker aperture 1 has a loudspeaker 6 mounted therein. In this example, the loudspeaker 6 has a diaphragm with an undulating form as described in, for example, WO2005/015950. A first side of the loudspeaker 6 directs sound into a space surrounding the loudspeaker enclosure 1 whilst a second side of the loudspeaker 6 mounted in the loudspeaker aperture directs sound into the interior space within the loudspeaker enclosure 12.

To make the loudspeaker enclosure 1, the first port 7 receives a distal end of a glue gun 5 and the glue gun is used to inject unhardened adhesive into the first port 7. The first port 7 is an end of the adhesive channel 10 proximal to the insertion position of the glue gun 5. The second port 8 is an end of the adhesive channel 10 distal to the insertion position of the glue gun 5.

The cable channel 9 extends along a cable channel path from a cable opening 17 in an outer wall of the enclosure 11 to an interior space within the enclosure 12. A cable 4 is located in the cable channel 9 such that the cable 4 extends from outside the loudspeaker enclosure 1 and through the cable channel 9 to the interior space within the enclosure 12. In this example, the cable 4 is connected to the loudspeaker 6 and transmits electrical signals to the loudspeaker 6. The loudspeaker 6 produces audio, i.e. sound, which corresponds to the electrical signals transmitted by the cable 4. The cable 4 is a multi-cable which includes a plurality of sub-cables. The sub-cables comprise one or more wires surrounded by an outer sleeve and the plurality of sub-cables are joined together by their outer sleeves. In this example, the cable 4 is a multi-cable comprising eight sub-cables.

The adhesive channel 10 extends from the first port 7 to the second port 8 along an adhesive channel path. The adhesive channel path extends around the cable 4 located in the cable channel 9 such that the adhesive channel 10 is partly defined by an outer surface of the cable 4. The adhesive channel 10 is further defined by one or more interior walls of the enclosure 19. In this example the adhesive channel path is substantially orthogonal to the cable channel path.

When making the loudspeaker enclosure 1, a distal end of the glue gun 5 is inserted into the first port 7 and unhardened adhesive is injected into the first port 7. The unhardened adhesive is forced along the adhesive channel 10 by the pressure exerted by the glue gun 5 injecting unhardened adhesive into the first port 7. As the unhardened adhesive is forced along the adhesive channel 10, it is brought into contact with the outer surface of the cable 4. In this example, the glue gun 5 is used to continually inject unhardened adhesive into the first port 7 until an amount of unhardened adhesive injected into the first port 7 is sufficient to push the unhardened adhesive completely through the adhesive channel 10 such that unhardened adhesive extrudes from the second port 8. In this way, it is assured that the cable 4 will be sealed in place in the cable channel 9.

According to the method of the present invention, the unhardened adhesive in the adhesive channel 10 is hardened, thereby attaching the cable 4 to the loudspeaker enclosure 1 and sealing the cable channel 9.

Prior to the adhesive being hardened, the enclosure 1 is considered as a precursor loudspeaker enclosure.

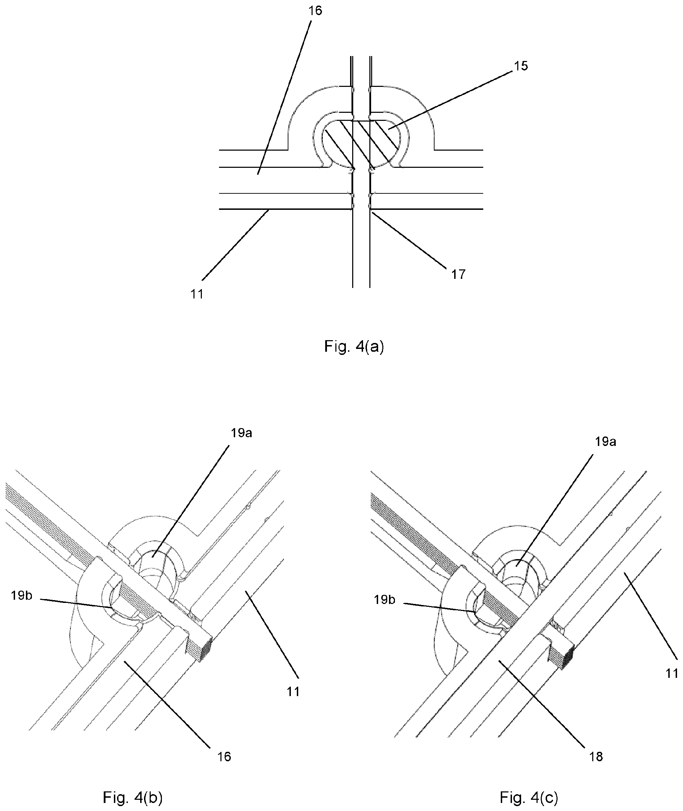

Fig. 4 shows a cross section of part of the cable channel 9 in accordance with some embodiments of the present invention. Fig. 4(a) is a cross-section of the cable channel 9 as viewed in the plane B-B as depicted in Fig. 3(a) showing a groove 16 between the outer wall of the enclosure 11 and interior walls of the enclosure 19a, 19b. Fig. 4(b) is a perspective view of Fig. 4(a). Fig. 4(c) is a perspective view corresponding to Fig. 4(b) wherein the groove 16 has been filled with a sealing foam 18.

When present as shown in Fig. 4(c), the sealing foam 18 provides a seal between the interior space within the enclosure 12 and the exterior of the enclosure when the first and second enclosure parts 2, 3 are attached together. In some examples the sealing foam 18 is glued in place. In other examples, the sealing foam 18 is fixed in place by an additional or alternative process, e.g. heat welding.

In some examples, the sealing foam 18 includes a hole which forms part of the cable channel 9.

It can be seen in Fig. 4 that the cable opening 17 is separated from the adhesive channel 10 by a predetermined distance. In some examples the predetermined distance is 2mm or more, 3mm or more, 4mm or more, and preferably in the range 2-10mm, or most preferably in the range 2-5mm. In some examples, the groove 16 occupies at least part of the predetermined distance separating the cable opening 17 and the adhesive channel 10.

As shown in Fig. 4, the cable channel path can be viewed as having various regions. A first region of the cable channel path is on a side of the adhesive channel 10 proximal to the cable opening 17. The cable channel 9 in the first region of the cable channel path has a size and shape that snugly fits the cable 4 such that unhardened adhesive injected in the first port 7 is substantially prevented from entering the first region of the cable channel path (the adhesive may be chosen to have a viscosity when in unhardened form which facilitates this). In the examples depicted in Fig. 4, this is the same side of the adhesive channel 10 as the groove 16. In some examples, snugly fitting the cable 4 means that the cable channel 9 has a negative tolerance with respect to the cable 4. Negative tolerance here means that the cable channel 9 is smaller than the cable 4 such that the cable channel 9 clamps the cable 4. In some examples, the cable channel 9 has a zero or slightly positive tolerance with respect to the cable 4. For example, the tolerance of the cable channel 9 with respect to the cable 4 may be in the range of -0.2mm to +0.2mm, more preferably in the range -0.1mm to +0.1mm, or most preferably in the range -0.2mm to 0mm.

A second region of the cable channel path is on a side of the adhesive channel 10 distal to the cable opening 17. The cable channel 9 in the second region of the cable channel path has a size and shape configured to snugly fit the cable 4 such that unhardened adhesive injected in the first port 7 is substantially prevented from entering the second region of the cable channel path (the adhesive may be chosen to have a viscosity when in unhardened form which facilitates this). In the examples depicted in Fig. 4, this is the opposite side of the adhesive channel 10 to the groove 16. In some examples, snugly fitting the cable 4 means that the cable channel 9 has a negative tolerance with respect to the cable 4. Negative tolerance here means that the cable channel 9 is smaller than the cable 4 such that the cable channel 9 clamps the cable 4. In some examples, the cable channel 9 has a zero or slightly positive tolerance with respect to the cable 4. For example, the tolerance of the cable channel 9 with respect to the cable 4 may be in the range of -0.2mm to +0.2mm in at least one lateral dimension, more preferably in the range -0.1mm to +0.1mm in at least one lateral dimension, or most preferably in the range -0.2mm to 0mm in at least one lateral dimension (lateral dimension = dimension lateral to the direction of the cable).

An intermediate region of the cable channel path is between the first and second regions of the cable channel path. The cable channel 9 in the intermediate region of the cable channel path has a size and shape configured to leave empty space between the cable 4 and the wall of the cable channel 9. The empty space between the cable 4 and the cable channel 9 forms the adhesive cavity 15.

The adhesive cavity 15 receives unhardened adhesive injected into the first port 7 such that unhardened adhesive injected into the first port 7 coats the outer surface of the cable 4 in the intermediate region of the cable channel path.

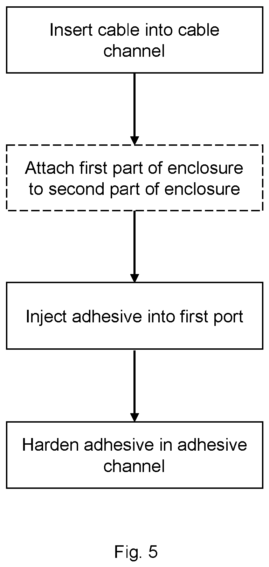

Fig. 5 is a flow chart depicting a method of making a loudspeaker enclosure 1 in accordance with the present invention.

In a first step, a cable 4 is inserted into the cable channel 9 of a precursor loudspeaker enclosure. In some embodiments, next a first part of the enclosure 2 is attached to a second part of the enclosure 3 to form an interior space of the enclosure 12. Following this, unhardened adhesive is injected into a first port 7 of the loudspeaker enclosure 1 and pushed through an adhesive channel 10 to the second port 8 of the loudspeaker enclosure 1 such that the unhardened adhesive is brought into contact with the cable 4. The adhesive is then hardened thereby attaching the cable 4 to the loudspeaker enclosure 1 and sealing the cable channel 9.

In some examples a loudspeaker 6 is mounted on the loudspeaker aperture prior to attaching the first enclosure part 2 to the second enclosure part 3.

In some examples, placing the cable 4 in the cable channel 9 may happen after attaching the first and second enclosure parts 2, 3 together.

The adhesive need not be a flexible adhesive. For example, the adhesive may be AB glue, water-based gel or UV glue.

In some embodiments, the unhardened adhesive, when injected into the first port 7 fills an adhesive cavity 15 located within the cable channel 9.

In some examples, some of the unhardened adhesive injected into the first port 7 and pushed through the adhesive channel 10 will reach the second port 8, thereby informing a user injecting the adhesive into the first port 7 that the adhesive has filled the adhesive cavity 15.

Hardening the adhesive may, for example, involve leaving the unhardened adhesive until it hardens or applying a process to the unhardened adhesive in order to harden it. The process may for example be a curing process.

Sealing the cable channel 9 involves forming a seal in the cable channel 9 which blocks sound within the interior space 12 from reaching the exterior of the enclosure via the cable channel 9. In some examples, this is done by substantially preventing air from flowing through the cable channel 9.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method of making a loudspeaker enclosure (1), the method including:
providing a precursor loudspeaker enclosure, the precursor loudspeaker enclosure including:
a first enclosure part (2) including a first port (7) formed by the precursor loudspeaker enclosure and a second port (8) formed by the precursor loudspeaker enclosure;
a second enclosure part (3) configured to be attached to the first enclosure part (2);
an adhesive channel (10) which extends from the first port (7) to the second port (8) along an adhesive channel path, wherein the second enclosure part (3) defines at least part of the adhesive channel (10); and
a cable channel (9) which extends from a cable opening (17) in an outer wall of the enclosure to an interior space within the enclosure, wherein a cable (4) is located in the cable channel (9) such that the cable (4) located in the cable channel (9) extends from outside the enclosure and through the cable channel (9) to the interior space within the enclosure;
wherein the adhesive channel (10) extends around the cable (4) located in the cable channel (9), wherein the adhesive channel (10) is partly defined by an outer surface of the cable (4);
injecting unhardened adhesive into the first port (7) such that the unhardened adhesive is forced along the adhesive channel (10) such that it is brought into contact with the outer surface of the cable (4); and
hardening the adhesive thereby attaching the second enclosure part (3) to the first enclosure part (2), attaching the cable (4) to the enclosure, and sealing the cable channel (9).

2. The method of claim 1, wherein the precursor loudspeaker enclosure further includes a loudspeaker aperture configured to have a loudspeaker (6) mounted therein such that a first side of a loudspeaker (6) mounted in the loudspeaker aperture is configured to direct sound into a space surrounding the enclosure whilst a second side of the loudspeaker mounted in the loudspeaker aperture directs sound into the interior space within the loudspeaker enclosure (1).

3. The method of claim 1 or 2, wherein the second enclosure part (3) defines at least part of the cable channel (9) and at least part of the cable opening (17), wherein the at least part of the cable channel (9) in the second enclosure part is open prior to the first enclosure part (2) being attached to the second enclosure part (3).

4. The method of any preceding claim, wherein the first and/or second enclosure parts (2, 3) include a groove (16) configured to accommodate sealing foam (18) for providing a seal between the interior space within the enclosure and the exterior of the enclosure when the first and second enclosure parts (2, 3) are attached together.

5. The method of any preceding claim, wherein the second enclosure part (3) is a container that includes a cavity, and the first enclosure part (2) is a lid configured to cover the cavity in the second enclosure part (3) when the second enclosure part (3) is attached to the first enclosure part (2) thereby providing the interior space within the enclosure.

6. The method of any preceding claim, wherein the cable channel (9) and the adhesive channel (10) are at least partly formed by a pillar region (13) in the second enclosure part (3), wherein the pillar region (13) extends from a floor of the second enclosure part (3) towards the first enclosure part (2) when the first and second enclosure parts (2, 3) are attached together.

7. The method of any preceding claim, wherein the first port (7) is configured to receive a distal end of a glue gun (5), and the method includes injecting the unhardened adhesive into the first port (7) using a glue gun (5) whose distal end is received in the first port (7).

8. The method of any preceding claim, wherein the cable channel (9) extends from the cable opening (17) along a cable channel path to the interior space within the enclosure, wherein
a first region of the cable channel path is on a side of the adhesive channel (10) proximal to the cable opening (17) wherein the cable channel (9) in the first region of the cable channel path has a size and shape configured to snugly fit the cable (4), such that unhardened adhesive injected in the first port (7) is substantially prevented from entering the first region of the cable channel path;
a second region of the cable channel path is on a side of the adhesive channel (10) distal to the cable opening (17) wherein the cable channel (9) in the second region of the cable channel path has a size and shape configured to snugly fit the cable (4), such that unhardened adhesive injected in the first port (7) is substantially prevented from entering the second region of the cable channel path;
an intermediate region of the cable channel path is between the first and second regions of the cable channel path wherein the cable channel (9) in the intermediate region of the cable channel path has a size and shape configured to leave empty space between the cable (4) and the wall of the cable channel (9) thereby providing an adhesive cavity;
wherein the adhesive cavity is configured to receive unhardened adhesive injected into the first port (7), such that unhardened adhesive injected into the first port (7) coats the outer surface of the cable (4) in the intermediate region of the cable channel path.

9. The method of any preceding claim, wherein the cable opening (17) is separated from the adhesive channel (10) by a predetermined distance of at least Xmm, where X is 2mm or more.

10. The method of any preceding claim, wherein the cable (4) is a multi-cable which includes a plurality of sub-cables, wherein
each sub-cable comprises one or more wires surrounded by an outer sleeve; and
the plurality of sub-cable are joined together by their outer sleeves.

11. A loudspeaker enclosure (1) including:
a first enclosure part (2) including a first port (7) and a second port (8);
a second enclosure part (3) attached to the first enclosure part (2);
an adhesive channel (10) which extends from the first port (7) to the second port (8) along an adhesive channel path, wherein the second enclosure part (3) defines at least part of the adhesive channel (10); and
a cable channel (9) which extends from a cable opening (17) in an outer wall of the enclosure to an interior space within the enclosure, wherein a cable (4) is located in the cable channel (9) such that the cable (4) located in the cable channel (9) extends from outside the enclosure and through the cable channel (9) to the interior space within the enclosure;
wherein the adhesive channel (10) extends around the cable (4) located in the cable channel (9), wherein the adhesive channel (10) is partly defined by an outer surface of the cable (4);
wherein the adhesive channel (10) contains hardened adhesive which is in contact with the outer surface of the cable (4), attaches the second enclosure part (3) to the first enclosure part (2), attaches the cable (4) to the enclosure, and seals the cable channel (9).

## Patentansprüche

1. Verfahren zur Herstellung eines Lautsprechergehäuses (1), wobei das Verfahren Folgendes umfasst:
Bereitstellen eines Vorläufer-Lautsprechergehäuses, wobei das VorläuferLautsprecher-Gehäuse Folgendes umfasst:
einen ersten Gehäuseteil (2), der einen ersten, durch das Vorläufer-Lautsprechergehäuse ausgebildeten Anschluss (7) und einen zweiten, durch das Vorläufer-Lautsprechergehäuse ausgebildeten Anschluss (8) beinhaltet;
einen zweiten Gehäuseteil (3), der dazu ausgelegt ist, an dem ersten Gehäuseteil (2) befestigt zu sein;
einen Haftmittelkanal (10), der sich von dem ersten Anschluss (7) zu dem zweiten Anschluss (8) entlang eines Haftmittelkanalpfads erstreckt, wobei der zweite Gehäuseteil (3) zumindest einen Teil des Haftmittelkanals (10) definiert; und
einen Kabelkanal (9), der sich von einer Kabelöffnung (17) in einer Außenwand des Gehäuses zu einem Innenraum innerhalb des Gehäuses erstreckt, wobei ein Kabel (4) in dem Kabelkanal (9) derart angeordnet ist, dass das in dem Kabelkanal (9) angeordnete Kabel (4) sich von außerhalb des Gehäuses und durch den Kabelkanal (9) hindurch zu dem Innenraum innerhalb des Gehäuses erstreckt;
wobei der Haftmittelkanal (10) sich um das in dem Kabelkanal (9) angeordnete Kabel (4) herum erstreckt, wobei der Haftmittelkanal (10) teilweise durch eine Außenfläche des Kabels (4) definiert ist;
Einspritzen von ungehärtetem Haftmittel in den ersten Anschluss (7) derart, dass das ungehärtete Haftmittel den Haftmittelkanal (10) derart entlanggedrückt wird, dass es in Kontakt mit der Außenfläche des Kabels (4) gebracht wird; und
Aushärten des Haftmittels, wodurch der zweite Gehäuseteil (3) an dem ersten Gehäuseteil (2) befestigt wird, das Kabel (4) an dem Gehäuse befestigt wird und der Kabelkanal (9) versiegelt wird.

2. Verfahren nach Anspruch 1, wobei das Vorläuferlautsprecher-Gehäuse ferner eine Lautsprecheröffnung umfasst, die dazu ausgelegt ist, einen Lautsprecher (6) darin montiert aufzuweisen, sodass eine erste Seite eines in der Lautsprecheröffnung montierten Lautsprechers (6) dazu ausgelegt ist, Schall in einen Raum, der das Gehäuse umgibt, zu leiten, während eine zweite Seite des in der Lautsprecheröffnung montierten Lautsprechers Schall in den Innenraum innerhalb des Lautsprechergehäuses (1) leitet.

3. Verfahren nach Anspruch 1 oder 2, wobei der zweite Gehäuseteil (3) zumindest einen Teil des Kabelkanals (9) und zumindest einen Teil der Kabelöffnung (17) definiert, wobei der zumindest eine Teil des Kabelkanals (9) in dem zweiten Gehäuseteil offen ist, bevor der erste Gehäuseteil (2) an dem zweiten Gehäuseteil (3) befestigt wird.

4. Verfahren nach einem der vorangegangenen Ansprüche, wobei der erste und/oder zweite Gehäuseteil (2, 3) eine Nut (16) umfasst/umfassen, die dazu ausgelegt ist, Dichtungsschaum (18) aufzunehmen, um eine Dichtung zwischen dem Innenraum innerhalb des Gehäuses und dem Äußeren des Gehäuses bereitzustellen, wenn der erste und zweite Gehäuseteil (2, 3) aneinander befestigt sind.

5. Verfahren nach einem der vorangegangenen Ansprüche, wobei der zweite Gehäuseteil (3) ein Behälter ist, der einen Hohlraum umfasst, und der erste Gehäuseteil (2) ein Deckel ist, der dazu ausgelegt ist, den Hohlraum in dem zweiten Gehäuseteil (3) zu bedecken, wenn der zweite Gehäuseteil (3) an dem ersten Gehäuseteil (2) befestigt ist, wodurch der Innenraum innerhalb des Gehäuses bereitgestellt wird.

6. Verfahren nach einem der vorangegangenen Ansprüche, wobei der Kabelkanal (9) und der Haftmittelkanal (10) zumindest teilweise durch eine Polsterregion (13) in dem zweiten Gehäuseteil (3) ausgebildet sind, wobei die Polsterregion (13) sich von einem Boden des zweiten Gehäuseteils (3) in Richtung des ersten Gehäuseteils (2) erstreckt, wenn der erste und zweite Gehäuseteil (2, 3) aneinander befestigt sind.

7. Verfahren nach einem der vorangegangenen Ansprüche, wobei der erste Anschluss (7) dazu ausgelegt ist, ein distales Ende einer Klebepistole (5) aufzunehmen, und das Verfahren das Einspritzen des ungehärteten Haftmittels in den ersten Anschluss (7) unter Verwendung einer Klebepistole (5) umfasst, deren distales Ende in dem ersten Anschluss (7) aufgenommen ist.

8. Verfahren nach einem der vorangegangenen Ansprüche, wobei der Kabelkanal (9) sich von der Kabelöffnung (17) entlang eines Kabelkanalpfads zu dem Innenraum innerhalb des Gehäuses erstreckt, wobei
eine erste Region des Kabelkanalpfads sich auf einer Seite des Haftmittelkanals (10) proximal zur Kabelöffnung (17) befindet, wobei der Kabelkanal (9) in der ersten Region des Kabelkanalpfads eine Größe und Form aufweist, die dazu ausgelegt sind, das Kabel (4) gleitend einzupassen, sodass im Wesentlichen verhindert wird, dass ungehärtetes Haftmittel, das in den ersten Anschluss (7) eingespritzt wird, in die erste Region des Kabelkanalpfads eindringt;
eine zweite Region des Kabelkanalpfads sich auf einer Seite des Haftmittelkanals (10) distal zu der Kabelöffnung (17) befindet, wenn der Kabelkanal (9) in der zweiten Region des Kabelkanalpfads eine Größe und Form aufweist, die dazu ausgelegt sind, das Kabel (4) gleitend einzupassen, sodass im Wesentlichen verhindert wird, dass ungehärtetes Haftmittel, das in den ersten Anschluss (7) eingespritzt wird, in die zweite Region des Kabelkanalpfads eindringt;
eine Zwischenregion des Kabelkanalpfads sich zwischen der ersten und zweiten Region des Kabelkanalpfads befindet, wobei der Kabelkanal (9) in dem Zwischenbereich des Kabelkanalpfads eine Größe und Form aufweist, die dazu ausgelegt sind, einen Leerraum zwischen dem Kabel (4) und der Wand des Kabelkanals (9) zu lassen, wodurch ein Haftmittelhohlraum bereitgestellt ist;
wobei der Haftmittelhohlraum dazu ausgelegt ist, ungehärtetes Haftmittel, das in den ersten Anschluss (7) eingespritzt wird, aufzunehmen, sodass in den ersten Anschluss (7) eingespritztes Haftmittel die Außenfläche des Kabels (4) in der Zwischenregion des Kabelkanalpfads beschichtet.

9. Verfahren nach einem der vorangegangenen Ansprüche, wobei die Kabelöffnung (17) von dem Haftmittelkanal (10) durch einen vorbestimmten Abstand von zumindest X mm getrennt ist, wobei X 2 mm oder mehr ist.

10. Verfahren nach einem der vorangegangenen Ansprüche, wobei das Kabel (4) ein Mehrfachkabel ist, das eine Vielzahl von Teilkabeln umfasst, wobei
jedes Teilkabel einen Draht oder mehrere Drähte umfasst, der/die von einer Außenhülse umgeben ist/sind; und
die Vielzahl von Teilkabeln durch ihre Außenhülsen miteinander verbunden sind.

11. Lautsprechergehäuse (1), umfassend:
einen ersten Gehäuseteil (2), der einen ersten Anschluss (7) und einen zweiten Anschluss (8) umfasst;
einen zweiten Gehäuseteil (3), der an dem ersten Gehäuseteil (2) befestigt ist;
einen Haftmittelkanal (10), der sich von dem ersten Anschluss (7) zu dem zweiten Anschluss (8) entlang eines Haftmittelkanalpfads erstreckt, wobei der zweite Gehäuseteil (3) zumindest einen Teil des Haftmittelkanals (10) definiert; und
einen Kabelkanal (9), der sich von einer Kabelöffnung (17) in einer Außenwand des Gehäuses zu einem Innenraum innerhalb des Gehäuses erstreckt, wobei ein Kabel (4) in dem Kabelkanal (9) derart angeordnet ist, dass das in dem Kabelkanal (9) angeordnete Kabel (4) sich von außerhalb des Gehäuses und durch den Kabelkanal (9) hindurch zu dem Innenraum innerhalb des Gehäuses erstreckt;
wobei der Haftmittelkanal (10) sich um das in dem Kabelkanal (9) angeordnete Kabel (4) herum erstreckt, wobei der Haftmittelkanal (10) teilweise durch eine Außenfläche des Kabels (4) definiert ist;
wobei der Haftmittelkanal (10) gehärtetes Haftmittel enthält, das in Kontakt mit der Außenfläche des Kabels (4) ist, den zweiten Gehäuseteil (3) an dem ersten Gehäuseteil (2) befestigt, das Kabel (4) an dem Gehäuse befestigt und den Kabelkanal (9) abdichtet.

## Revendications

1. Procédé de fabrication d'une enceinte de haut-parleur (1), le procédé incluant les étapes consistant à :
fournir une enceinte de haut-parleur précurseur, l'enceinte de haut-parleur précurseur incluant :
une première partie d'enceinte (2) incluant un premier orifice (7) formé par l'enceinte de haut-parleur précurseur et un second orifice (8) formé par l'enceinte de haut-parleur précurseur ;
une seconde partie d'enceinte (3) configurée pour être fixée à la première partie d'enceinte (2) ;
un canal d'adhésif (10) qui s'étend du premier orifice (7) jusqu'au second orifice (8) le long d'un trajet de canal d'adhésif, dans lequel la seconde partie d'enceinte (3) définit au moins une partie du canal d'adhésif (10) ; et
un canal de câble (9) qui s'étend à partir d'une ouverture de câble (17) dans une paroi externe de l'enceinte vers un espace intérieur à l'intérieur de l'enceinte, dans lequel un câble (4) est situé dans le canal de câble (9) de telle sorte que le câble (4) situé dans le canal de câble (9) s'étende depuis l'extérieur de l'enceinte et à travers le canal de câble (9) jusqu'à l'espace intérieur à l'intérieur de l'enceinte ;
dans lequel le canal d'adhésif (10) s'étend autour du câble (4) situé dans le canal de câble (9), dans lequel le canal d'adhésif (10) est en partie défini par une surface extérieure du câble (4) ;
injecter de l'adhésif non durci dans le premier orifice (7) de telle sorte que l'adhésif non durci soit forcé le long du canal d'adhésif (10) de telle sorte qu'il soit amené en contact avec la surface extérieure du câble (4) ; et
faire durcir l'adhésif, en fixant ainsi la seconde partie d'enceinte (3) à la première partie d'enceinte (2), en fixant le câble (4) à l'enceinte et en scellant le canal de câble (9).

2. Procédé selon la revendication 1, dans lequel l'enceinte de haut-parleur précurseur inclut en outre une ouverture de haut-parleur configurée pour présenter un haut-parleur (6) monté dans celle-ci de telle sorte qu'un premier côté d'un haut-parleur (6) monté dans l'ouverture de haut-parleur est configuré pour diriger le son dans un espace entourant l'enceinte tandis qu'un second côté du haut-parleur monté dans l'ouverture de haut-parleur dirige le son dans l'espace intérieur à l'intérieur de l'enceinte de haut-parleur (1).

3. Procédé selon la revendication 1 ou 2, dans lequel la seconde partie d'enceinte (3) définit au moins une partie du canal de câble (9) et au moins une partie de l'ouverture de câble (17), dans lequel la au moins une partie du canal de câble (9) dans la seconde partie d'enceinte est ouverte avant que la première partie d'enceinte (2) ne soit fixée à la seconde partie d'enceinte (3).

4. Procédé selon l'une quelconque des revendications précédentes, dans lequel les première et/ou seconde parties d'enceinte (2, 3) incluent une rainure (16) configurée pour recevoir une mousse d'étanchéité (18) pour fournir un joint entre l'espace intérieur à l'intérieur de l'enceinte et l'extérieur de l'enceinte lorsque les première et seconde parties d'enceinte (2, 3) sont fixées ensemble.

5. Procédé selon l'une quelconque des revendications précédentes, dans lequel la seconde partie d'enceinte (3) est un contenant qui inclut une cavité, et la première partie d'enceinte (2) est un couvercle configuré pour recouvrir la cavité dans la seconde partie d'enceinte (3) lorsque la seconde partie d'enceinte (3) est fixée à la première partie d'enceinte (2), en fournissant ainsi l'espace intérieur à l'intérieur de l'enceinte.

6. Procédé selon l'une quelconque des revendications précédentes, dans lequel le canal de câble (9) et le canal d'adhésif (10) sont au moins partiellement formés par une région de pilier (13) dans la seconde partie d'enceinte (3), dans lequel la région de pilier (13) s'étend à partir d'un plancher de la seconde partie d'enceinte (3) vers la première partie d'enceinte (2) lorsque les première et seconde parties d'enceinte (2, 3) sont fixées ensemble.

7. Procédé selon l'une quelconque des revendications précédentes, dans lequel le premier orifice (7) est configuré pour recevoir une extrémité distale d'un pistolet à colle (5), et le procédé inclut l'injection de l'adhésif non durci dans le premier orifice (7) en utilisant un pistolet à colle (5) dont l'extrémité distale est reçue dans le premier orifice (7).

8. Procédé selon l'une quelconque des revendications précédentes, dans lequel le canal de câble (9) s'étend depuis l'ouverture de câble (17) le long d'un trajet de canal de câble jusqu'à l'espace intérieur à l'intérieur de l'enceinte, dans lequel
une première région du trajet de canal de câble est sur un côté du canal d'adhésif (10) à proximité de l'ouverture de câble (17), dans lequel le canal de câble (9) dans la première région du trajet de canal de câble présente une taille et une forme configurées pour s'adapter étroitement au câble (4), de sorte que l'adhésif non durci injecté dans le premier orifice (7) est sensiblement empêché d'entrer dans la première région du trajet de canal de câble ;
une seconde région du trajet de canal de câble est sur un côté du canal d'adhésif (10) distal par rapport à l'ouverture de câble (17), dans lequel le canal de câble (9) dans la seconde région du trajet de canal de câble présente une taille et une forme configurées pour s'adapter étroitement au câble (4), de sorte qu'un adhésif non durci injecté dans le premier orifice (7) est sensiblement empêché d'entrer dans la seconde région du trajet de canal de câble ;
une région intermédiaire du trajet de canal de câble est entre les première et seconde régions du trajet de canal de câble, dans lequel le canal de câble (9) dans la région intermédiaire du trajet de canal de câble présente une taille et une forme configurées pour laisser un espace vide entre le câble (4) et la paroi du canal de câble (9), en fournissant ainsi une cavité adhésive ;
dans lequel la cavité adhésive est configurée pour recevoir un adhésif non durci injecté dans le premier orifice (7), de telle sorte que l'adhésif non durci injecté dans le premier orifice (7) recouvre la surface extérieure du câble (4) dans la région intermédiaire du trajet de canal de câble.

9. Procédé selon l'une quelconque des revendications précédentes, dans lequel l'ouverture de câble (17) est séparée du canal d'adhésif (10) par une distance prédéterminée d'au moins X mm, où X est 2 mm ou plus.

10. Procédé selon l'une quelconque des revendications précédentes, dans lequel le câble (4) est un câble multiple qui inclut une pluralité de sous-câbles, dans lequel
chaque sous-câble comprend un ou plusieurs fils entourés d'un manchon externe ; et
la pluralité de sous-câbles sont joints ensemble par leurs manchons extérieurs.

11. Enceinte de haut-parleur (1) incluant :
une première partie d'enceinte (2) incluant un premier orifice (7) et un second orifice (8) ;
une seconde partie d'enceinte (3) fixée à la première partie d'enceinte (2) ;
un canal d'adhésif (10) qui s'étend du premier orifice (7) jusqu'au second orifice (8) le long d'un trajet de canal d'adhésif, dans lequel la seconde partie d'enceinte (3) définit au moins une partie du canal d'adhésif (10) ; et
un canal de câble (9) qui s'étend à partir d'une ouverture de câble (17) dans une paroi externe de l'enceinte vers un espace intérieur à l'intérieur de l'enceinte, dans lequel un câble (4) est situé dans le canal de câble (9) de telle sorte que le câble (4) situé dans le canal de câble (9) s'étende depuis l'extérieur de l'enceinte et à travers le canal de câble (9) jusqu'à l'espace intérieur à l'intérieur de l'enceinte ;
dans lequel le canal d'adhésif (10) s'étend autour du câble (4) situé dans le canal de câble (9), dans lequel le canal d'adhésif (10) est en partie défini par une surface extérieure du câble (4) ;
dans lequel le canal d'adhésif (10) contient un adhésif durci qui est en contact avec la surface extérieure du câble (4), fixe la seconde partie d'enceinte (3) à la première partie d'enceinte (2), fixe le câble (4) à l'enceinte, et scelle le canal de câble (9).
